## Europäisches Patentamt
## European Patent Office
## Office européen des brevets

(19)

(11) Veröffentlichungsnummer: **0 089 056**
**B1**

(12) **EUROPÄISCHE PATENTSCHRIFT**

(45) Veröffentlichungstag der Patentschrift:
**08.04.87**

(51) Int. Cl.⁴: **A 23 L 1/308 //**
**A61K35/78**

(21) Anmeldenummer: **83102528.3**

(22) Anmeldetag: **15.03.83**

(54) **Diätetisches Mittel, Verfahren zu seiner Herstellung und seine Verwendung zur Regulierung des Cholesterinspiegels im Serum.**

(30) Priorität: **17.03.82 DE 3209630**

(43) Veröffentlichungstag der Anmeldung:
**21.09.83 Patentblatt 83/38**

(45) Bekanntmachung des Hinweises auf die Patenterteilung:
**08.04.87 Patentblatt 87/15**

(84) Benannte Vertragsstaaten:
**AT BE CH DE FR GB IT LI LU NL SE**

(56) Entgegenhaltungen:
**EP-A-0 035 643**
**DE-A-2 653 218**
**FR-A-2 135 327**

**CHEMICAL ABSTRACTS, Band 92, Nr. 11, März 17, 1980, Seite 481, Zusammenfassung Nr.93063k. COLUMBUS, OHIO, (US). E. GINTER et al.: "Natural hypocholesterolenic agent: pectin plus ascorbic acid"**
**JOURNAL OF THE SCIENCE OF FOOD & AGRICULTURE, Band 32, Nr. 4, April 1981. Seiten 392-398. R. GORMLEY: "Dietary Fibre - Some Properties of Alcohol-insoluble Solids Residues from Apples". FOOD SCIENCE & TECHNOLOGY, Zusammenfassung Nr. 72041361, "Apple Pulp Treatment"**

(73) Patentinhaber: **OPEKTA GmbH & Co., Linnicher Strasse 48, D-5000 Köln 41 (Müngersdorf) (DE)**

(72) Erfinder: **Oswald, Günter, Köslinger Strasse 1, D-5000 Köln 60 (DE)**

(74) Vertreter: **Werner, Hans- Karsten, Dr., Deichmannhaus am Hauptbahnhof, D-5000 Köln 1 (DE)**

EP 0 089 056 B1

LIBER, STOCKHOLM 1987

## Beschreibung

Gegenstand der vorliegenden Erfindung ist ein Verfahren zur Herstellung eines diätetishen Mittels mit cholesterinsenkender Wirkung aus Apfeltrester, welches sich leicht und reproduzierbar herstellen läßt und in einfacher Form, nämlich aufgelöst in warmen oder kalten Getränkten verwenden läßt.

Es ist bekannt, daß Pektine durch eine Hemmung der Rückresorption von Gallensäuren einen positiven Einfluß auf den Serumcholesterinspiegel haben; vergl.

Keys, A; Grande, F; Anderson, I.T;
Fiber and pectin in the chet and serum cholesterol concentration in man
Proc. soc. Exp. Siol. 106, S. 555 (1961),
Leveille, GA; Sauberlich, HE;
Mechanism of cholesterol - depressing effect of Pektin in the cholesterol - fed rat
I. Nat. 88, S. 209 (1966),
Palmer, GH; Dixon, DG;
Effect of Pektin dose on serum cholesterol levels
Amer. I. Clin. Nat. 18, S. 437 (1966).

Weiterhin ist bekannt, daß die Ascorbinsäure die cholesterinsenkende Wirkung des Pektins verstärkt. Der Mechanismus ist nochnicht völlig aufgeklärt, jedoch wird angenommen, daß Ascorbinsäure eine 7α-Hydroxylierung des Cholesterins bewirkt und es dadurch im weiteren Abbau zu Gallensäuren zuführt; vergl.

Ginter, E; Kubek, FJ; Vozar, J und Bobek, P;
Natural Hypocholesterolemic Agent, Pektin plus Ascorbic Acid
Internat. J. Vit. Nat. Res. 49, S. 407 (1979).

Es hat auch nicht an Versuchen gefehlt, diätetische Lebensmittel mit cholesterinsenkender Wirkung zu entwickeln; vergl.

EP-OS 0 028 374 und
EP-OS 0 035 643.

Aus der EP-OS 0 028 374 ist ein Diätmittel bekannt, welches außer Pektin Kleie und Gelatine enthält sowie ggf. zusätzlich hochwertiges Eiweiß, Fettsäuren, Vitamine und Mineralsalze. Dieses Mittel soll zu lockeren knusprigen Stückchen, Haarnudelsträngen, mundgerechten Häppchen oder schuppigen Täfelchen verarbeitet werden.

Aus der EP-OS 0 035 643 ist ein diätetisches Lebensmittel bekannt, welches einen Gehalt an protopektinhaltigen Rohstoffen aufweist, die ggf. entsaftet sind und mit wässrigen Lösungen indifferenter, neutral reagierender, mit Wasser mischbarer organischer Lösungsmittel, vorzugsweise niedrigen Alkoholen, extrahiert sind. Als Rohstoffe werden u.a. Kernobst, Steinobst, Citrusfrüchte, Rüben, Karotten, entkörnte Maiskolben, Sonnenblumenkronen und Hanfstengelabfälle benannt. Vorzugsweise wird jedoch ein Präparat aus Apfeltrester beschrieben. Eine Nacharbeitung und Untersuchung dieses Apfeltresterpräparates hat gezeigt, daß der Körper nicht in der Lage ist, mehr als 40 - 45 % der Protopektine aufzuschließen und somit für die cholesterinsenkende Wirkung zu aktivieren. Der Rest der Protopektine wird somit wie die übrigen Ballaststoffe erst im Dickdarm begrenzt oder gar nicht aufgeschlossen und geht somit für die aktive Senkung des Serumcholesterinspiegels verloren.

Die FR-A-2 135 327 beschreibt ein Verfahren zur Behandlung der Apfeltrester, bei dem mit Wasser und einer basischen Lösung extrahiert und dann mit siedendem Wasser aufgeschlossen wird. Das Pektin wird dabei vollständig entfernt.

Die vorliegende Erfindung hat sich die Aufgabe gestellt, ein Verfahren zur Herstellung eines diätischen Mittels aus Apfeltrester zur Verfügung zu stellen, wodurch das Mittel leicht herstellbar wird und physiologisch unbedenklich ist. Weiterhin soll das erfindungsgemäß hergestellte Mittel den Gehalt an Protopektinen optimal für die cholesterinsenkende Wirkung aktivieren, die cholesterinsenkende Wirkung durch den Zusatz von Ascorbinsäure verstärken und obendrein leicht und angenehm aufzunehmen sein.

Diese Aufgabe wird dadurch gelöst, daß man getrockneten Apfeltrester nach dem Trocknen

a) mit Wasser oder verdünntem wässrigen Alkohol oder mit wässrigem, säurehaltigen Alkohol extrahiert,

b) mit einer physiologisch unbedenklichen anorganischen oder organischen Säure bei einem pH-Wert von kleiner als 3 aufschließt,

c) neutralisiert und

d) entweder unter Zusatz von Ascorbinsäure naß vermahlt, pellettiert und mit Heißluft unter 100°C trocknet, oder mit Heißluft unter 100°C trocknet, trocken vermahlt, mit Ascorbinsäure vermischt und unter erneutem Zusatz von Wasser und/oder verdünntem Alkohol agglomeriert.

Vorzugsweise enthält dieses erfindungsgemäß hergestellte Mittel mindestens 50 Gew.-% Ballaststoffe, mindestens 10 Gew.-% Calcium-Pektat, mindestens 1 Gew.-% Ascorbinsäure und höchst 10 Gew.-% Zucker.

Die Extraktion der getrockneten Apfeltrester mit Wasser oder wässrigem Alkohol erfolgt vorzugsweise bei 40 - 60° bei Verwendung von Wasser oder bei Raumtemperatur mit 40 - 50 %igem Alkohol, oder mit 45 - 55 %igem wässrigem, säurehaltigen Alkohol bei Temperaturen von 60 - 80°C. Als Alkohol kommen insbesondere Methanol, Äthanol, Propanol und Isopropanol in Frage. Äthanol wird aus physiologischen Gründen und Methanol aus preislichen Gründen bevorzugt. Diese Extraktion entfernt aus dem getrockneten Apfeltrester insbesondere die Zucker, so daß der Gehalt an Zuckern im fertigen Mittel unter 10 Gew.-% liegt. Der Hauptbestandteil der verbleibenden Zucker ist Fruktose. Bei der Extraktion mit 40 - 60° warmem Wasser werden auch die bereits vorhandenen Mengen nativen Pektins entfernt. Bei der Extraktion mit verdünntem Alkohol verbleibt das native Pektin im Präparat.

Der Verbleib des nativen Pektins wäre an sich von Vorteil, kann jedoch nur um den Preis der Extraktion mit verdünntem Alkohol erreicht werden. Die Entfernung von nativem Pektin aus Apfeltrester durch Extraktion mit Wasser wird durch die niedrigeren Kosten voll kompensiert.

Von entscheidender Bedeutung ist der Aufschluß der Protopektine in der zweiten Stufe mit Hilfe einer physiologisch unbedenklichen anorganischen oder organischen Säure bei einem pH-Wert von kleiner als 3. Vorzugsweise wird hierfür Milchsäure verwendet, welche den Aufschluß bei Temperaturen von 60 - 80°C optimal bewirkt. Prinzipiell können aber auch alle anderen anorganischen oder organischen Säuren verwendet werden, deren Salze physiologisch unbedenklich sind und nach lebensmittelrechtlichen Vorschriften oder aus geschmacklichen Gründen nicht als störend empfunden werden.

Eine weitere Ausführungsform der Erfindung kombiniert die Extraktion und den Aufschluß der Protopektine durch den Einsatz von 45 - 55 %igem wässrigem, säurehaltigen Alkohol bei Temperaturen von 60 - 80°C. Auch hierbei bleibt das ursprünglich vorhandene native Pektin erhalten. Weiterhin wird bei dieser Verfahrensvariante die Säure weitgehend ausgewaschen und muß somit nicht mehr neutralisiert werden.

Die Neutralisation in der dritten Verfahrensstufe kann prinzipiell mit allen physiologisch unbedenklichen Alkalien erfolgen. Insbesondere bei Verwendung von Milchsäure hat sich der Einsatz von Natriumkarbonat oder Calciumkarbonat bewährt.

Das neutralisierte Präparat kann auf zwei Wegen in das endgültige diätetische Mittel überführt werden. Der eine Weg besteht darin, das Gemisch unter Zusatz von Ascorbinsäure naß zu vermahlen, zu pelletieren und danach mit Heißluft unter 100°C zu trocknen. Der andere Weg besteht darin, das Präparat zunächst mit Heißluft unter 100°C zu trocknen, danach trocken zu vermahlen, mit Ascorbinsäure zu vermischen und unter erneutem Zusatz von Wasser und/oder verdünntem Alkohol zu agglomerieren. In beiden Fällen entstehen Präparate, die sich leicht in heißen und kalten Getränken auflösen lassen und dadurch leicht und angenehm verzehrt werden können.

Die erfindungsgemäß hergestellten diätetischen Mittel sind arm an Zuckern und in Glucose spaltbaren Kohlehydraten, so daß sie insbesondere auch von Diabetikern ohne Belastung des Glucose-Stoffwechsels genommen werden können. Die Präparate sind von angenehm säuerlichem Geschmack durch die Ascorbinsäure. Sie sind weiterhin in der Lage, den täglichen Bedarf eines Menschen an Ascorbinsäure zu decken. Die erfindungsgemäß hergestellten diätetischen Mittel enthalten mindestens 10 % Pektinsalze und sind daher in der Lage, in erheblichem Maße Gallensäuren der Rücksesorption zu entziehen. Das Cholesterin wird an das Lignin gebunden mit den Faeces abgeführt. Durch den Zusatz von Ascorbinsäure wird weiteres Cholesterin hydroxyliert und letztendlich in Gallensäuren überführt. Gallensäuren und Cholesterin werden an die Polygalakturonsäure des Pektins und das Lignin der Ballaststoffe gebunden und mit den Faeces abgeführt.

Zur Durchführung des erfindungsgemäßen Verfahrens wird üblicher lagerfähiger und getrockneter Apfeltrester gewünschtenfalls durch Sieben von dem gröbsten Staubanteil befreit und mit warmem Wasser, vorzugsweise bei etwa 50°C, im Verhältnis 1: 6 bis 1: 10 extrahiert. Dabei werden die wasserlöslichen Polyosen, Oligosaccharide, Monosaccharide, Fruchtsäuren, Pflanzenphenole und der restliche Staub entfernt. Die Kontaktzeit des Apfeltresters mit Wasser soll so kurz wie möglich sein, um den optimalen Grad der Auswaschung zu gewähren, gleichzeitig jedoch soll das Zellgefüge des Tresters so wenig wie möglich angegriffen werden, um bei der nachfolgenden Zentrifugation leicht verarbeitbar zu bleiben. Die im Zentrifugenkuchen verbleibende Restfeuchte ist in etwa der Kontaktzeit Trester mit Wasser proportional. Zu hohe Wasseraufnahme läßt eine Verdrängungswäsche in der Zentrifuge nicht zu. Bei Verwendung vom wässrigem Alkohol werden Konzentrationen von 40 - 50° und Raumtemperatur bevorzugt. Bei dieser Extraktion werden ebenfalls in ausreichendem Maße Polyosen, Oligosaccharide, Monosaccharide getrennt. Natives Pektin bleibt jedoch ungelöst im Präparat.

Etwa 3 Teile des feuchten Zentrifugenrückstandes werden mit 1 Teil 50 %iger Milchsäure versetzt und 1 Stunde im Reaktor bei 60 - 80°C gehalten. Hierbei erfolgt ein praktisch vollständiger Aufschluß der Protopektine in natives Pektin. Das Gemisch wird anschließend mit der äquivalenten Menge Alkali neutralisiert. Besonders bewährt haben sich Natriumbikarbonat und Calciumkarbonat. Extraktion und Aufschluß lassen sich jedoch auch zu einer Stufe zusammenfassen.

Sofern naß vermahlen werden soll, wird etwa 1 Teil Ascorbinsäure auf 10 Teile Calcium-Pektat zugesetzt und mittels einer Mühle gründlich vermahlen. Das zerkleinerte Reaktionsgut wird im Wirbelschichttrockner, vorzugsweise mit heißer Luft von 80 - 85°C getrocknet. Man erhält leicht sauer schmeckende, schwach nach Äpfeln duftende Granalien, die gewünschtenfalls noch gesiebt oder windgesichtet werden können. Prinzipiell ist auch möglich, die Trocknung vor der Vermahlung und vor dem Zusatz von Ascorbinsäure durchzuführen, danach trocken zu vermahlen, Ascorbinsäure beizumischen und danach unter Zusatz von Wasser und/oder wässrigem Alkohol zu agglomerieren.

Prinzupiell besteht die Möglichkeit, die Mittel noch zu aromatisieren oder zu färben. Um einen möglichst natürlichen Zustand zu belassen, wird hierauf jedoch meist verzichtet.

In den nachfolgenden Beispielen werden typische Ausführungsformen des erfindungsgemäßen Verfahrens zur Herstellung eines diätetischen Mittels näher beschrieben.

## Beispiel 1

100 kg eingelagerter getrockneter Apfeltrester wird gesiebt, dadurch vom gröbsten Staubanteil befreit und mit warmem Wasser von 50°C im Verhältnis 1 : 8 eingeweicht. Nach etwa 20 Minuten wird abgetrennt.Das Filtrat enthält wasserlösliche Polyosen, Oligosaccharide, Monosaccharide, Fruchtsäuren und Pflanzenphenole sowie den restlichen Staub. Der Rückstand wird in einer Zentrifuge weitgehend von Wasser befreit und unverzüglich mit 30 Litern 50 %-iger Milchsäure versetzt. Das Reaktionsgefäß wird 1 Stunde auf 60 - 80°C temperiert. Danach wird mit einer äquivalenten Menge Calciumkarbonat neutralisiert. Nach der Neutralisation wird auf 10 Teile des vorhandenen Calciumpektats 1 Teil Ascorbinsäure zugegeben und mittels einer Messermühle naß vermahlen. Das fein zerkleinerte Reaktionsgut wird im Wirbelschichttrockner mit heißer Luft von 80 - 85°C getrocknet. Man erhält leicht sauer schmeckende, schwach nach Äpfeln duftende Granalien bzw. Pelletts, die durch Sieben oder Windsichten von Feinkorn befreit werden. Die so erhaltenen Produkte zeigen analytisch einen Ballaststoffgehalt von mindestens 50 %, einen Gehalt an Calciumpektat von mindestens 10 %, einen Ascorbinsäuregehalt von mindestens 1 %, einen Mineralstoffgehalt von mindestens 5 %. Der Gehalt an Zuckerstoffen liegt unter 10 %. 70 % der Zuckerstoffe sind Fruchtzucker. Das Präparat kann in üblichen heißen oder kalten Getränken eingerührt und nach einigen Minuten Quellzeit verzehrt werden. Es empfiehlt sich, 3 x täglich 2 Eßlöffel dieses Präparats in einem Getränk aufgerührt zu verzehren. Das so aufgenommene diätetische Mittel trägt weiterhin zur Anreicherung der Nahrung mit Ballaststoffen bei.

## Beispiel 2

100 kg eingelagerter getrockeneter Apfeltrester wird gesiebt und mit 1000 Litern 50 %igem wässrigem Alkohol unter Zusatz von 30 Litern 50 %iger Milchsäure 1 Stunde am Rückfluß gekocht (ca. 75°C). Es wird abgetrennt, und der Rückstand mit 600 Litern 40 %igem Alkohol bei 45°C 15 Minuten lang gewaschen. Sofern der pH-Wert kleiner als 5 ist, wird mit Calciumcarbonat neutralisiert. Es wird getrocknet, vermahlen, mit Ascorbinsäure versetzt und granuliert. Das Produkt entspricht dem des Beispiels 1, jedoch ist der Gehalt an Calciumlaktat wesentlich geringer.

## Patentansprüche

1. Verfahren zur Herstellung eines diätetischen Mittels mit cholesterinsenkender Wirkung aus Apfeltrester, dadurch gekennzeichnet, daß man getrockneten Apfeltrester nach dem Trocknen
a) mit Wasser oder verdünntem wässrigen Alkohol oder mit wässrigem, säurehaltigen Alkohol extrahiert,
b) mit einer physiologisch unbedenklichen anorganischen oder organischen Säure bei einem pH-Wert von kleiner als 3 aufschließt,
c) neutralisiert und
d) entweder unter Zusatz von Ascorbinsäure naß vermahlt, pelletiert und mit Heißluft unter 100°C trocknet, oder mit Heißluft unter 100°C trocknet, trocken vermahlt, mit Ascorbinsäure vermischt und unter erneutem Zusatz von Wasser und/oder verdünntem Alkohol agglomeriert.

2. Verfahren zur Herstellung eines Mittels gemäß Anspruch 1, dadurch gekennzeichnet, daß
a) die Extraktion mit 40 - 60° warmem Wasser oder mit 40 - 50 %igem wässrigem Alkohol bei Raumtemperatur, oder mit 45 - 55 %igem wässrigem, säurehaltigen Alkohol bei Temperaturen von 60 - 80°C
b) der Aufschluß mit Milchsäure und
c) die Neutralisation mit Calciumcarbonat erfolgt.

## Claims

1. A process for preparing a dietetic agent having a cholesterol-lowering activity from apple marc, characterized in that dried apple marc after drying is
a) extracted with water or diluted aqueous alcohol or with aqueous alcohol containing an acid,
b) digested with a physiologically acceptable inorganic or organic acid at a pH value of less than 3,
c) neutralized and
d) either ground with admixed ascorbic acid when wet, pelletized and dried with hot air below 100°C or dried with hot air below 100°C, ground when dry, mixed with ascorbic acid and agglomerated by renewed addition of water and/or diluted alcohol.

2. The process for preparing an agent according to claim 1, characterized in that
a) the extraction is effected with water of from 40°C to 60°C or with a 40 to 50% aqueous alcohol at room temperature or with a 45 to 55% aqueous alcohol containing an acid at a temperature of from 60°C to 80°C,
b) the digestion is effected with lactic acid and
c) the neutralization is effected with calcium carbonate.

**Revendications**

1. Procédé d'obtention d'un produit diététique ayant une action d'abaissement du cholestérol à partir de tourteaux de pommes, caractérisé en ce que, après séchage, le tourteau de pommes subit les opérations suivantes:

a) extraction à l'eau, ou avec une solution aqueuse diluée d'alcool, ou avec une solution aqueuse acide d'alcool,

b) attaque avec un acide physiologiquement sans danger, minéral ou organique, à un pH inférieur à 3,

c) neutralisation, et

d) soit après addition d'acide ascorbique, broyage humide, agglomération en boulettes et séchage à l'air chaud au-dessous de 100°C, soit après séchage à l'air chaud au-dessous de 100°C, broyage à sec, mélange avec de l'acide ascorbique et agglomération en boulettes après nouvelle addition d'eau ou d'alcool dilué.

2. Procédé d'obtention d'un produit selon la revendication 7, caractérisé en ce que:

a) l'extraction est faite à l'eau chaude à 40-60°C ou avec une solution aqueuse d'alcool à 40-50 % à température ordinaire, ou avec une solution aqueuse contenant un acide d'alcool à 45-55 % à une température de 60-80°C,

b) l'attaque est faite à l'acide lactique, et

c) la neutralisation est faite avec du carbonate de calcium.